# EUROPEAN PATENT SPECIFICATION

(11) **EP 1 752 720 B1**
(45) Date of publication and mention of the grant of the patent: **12.07.2017**
(21) Application number: 05743402.9
(22) Date of filing: 13.05.2005
(51) Int. Cl.: F24J 2/32, F24J 2/05

(54) **GLASS VACUUM HEAT PIPE TYPE SOLAR HEAT COLLECTION PIPE**
GLASVAKUUMWÄRMEROHR-SONNENKOLLEKTORROHR
CONDUITE DE COLLECTE DE CHALEUR SOLAIRE DE TYPE CONDUITE THERMIQUE EN VERRE SOUS VIDE

(30) Priority: 13.05.2004 CN 200420050936; 06.02.2005 CN 200510007327
(43) Date of publication of application: 14.02.2007
(73) Proprietor: Beijing Tus-Clean Energy Technology Co., Ltd., Haidian District, Beijing (CN); Tsinghua Solar Systems Ltd., Changping District, Beijing (CN)
(72) Inventor: YIN, Zhiqiang, Haidian District, Beijing 100085 (CN); YAN, Xiyuan, Haidian District, Beijing 100085 (CN); NIU, Chuanjin, Haidian District, Beijing 100085 (CN); LI, Chunmei, Haidian District, Beijing 100085 (CN)
(74) Representative: Michalski Hüttermann & Partner Patentanwälte mbB
(86) International application number: PCT/CN2005/000668
(87) International publication number: WO 2005/111516

(56) References cited:
- CN-A- 1 121 577
- CN-A- 1 121 577
- CN-A- 1 126 303
- CN-A- 1 126 303
- CN-C- 1 125 290
- DE-A1- 2 646 987
- DE-A1- 2 719 255
- FR-A1- 2 398 981
- JP-A- 10 300 242
- JP-A- 59 164 848
- US-A- 4 474 170

## Description

### Field of the invention

The present invention relates to an all-glass heat pipe based evacuated solar collector tube, and belongs to a solar thermal application technique field.

### Description of the Prior Art

A glass-metal evacuated solar collector tube having a metal heat pipe is a well-developed heat collecting device having higher heat collecting performance, which device mainly is constituted by an outer glass tube and a metal absorber with a heat pipe. But this solar collecting manner has a complex structure, a troublesome technology, and a high manufacture cost.

In order to simplify the technology and reduce the cost, an envisagement of an all-glass heat pipe based evacuated solar collector tube has appeared in recent years. This envisagement has improved the traditional all-glass evacuated solar collector tube, and at the end connection of an outer glass tube (covering glass tube) and an inner glass tube of the collector tube, the portion between diameters of the inner glass tube and the covering glass tube is connected and elongated by same kind of glass and is evacuated and bonded, so that the open inner tube cavity of the traditional all-glass evacuated solar collector tube is evacuated and bonded cavity is filled with a heat-transfer liquid in advance, wherein the covering glass tube and the inner glass tube are of same glass material. This all-glass heat pipe based evacuated solar collector tube has a simple structure, a higher reliability due to same glass, and a lower manufacture cost.

In the China Patent Application having a disclosure No. CN 1121577A and a application No. 94117274.0, described is "a heat pipe type evacuated collector tube, characterized by an all-glass heat pipe type evacuated collector tube, which is supported in an outer glass tube by an inner glass tube having an external surface coated with a spectrum selective absorbing coating through a strong retainer with a flash getter at the dome end contacted the inside surface of the outer glass tube, and the inner and outer glass tubes are bonded at the internal cavity of the inner glass tube. The other end is connected the out gassing tube and sealed off at out gassing mouth, then the internal cavity of the inner glass tube is evacuated through a liquid injection mouth at its upper end to remove the air, after that a proper amount of medium is injected, and the liquid injection mouth is sealed off after finishing injection, thereby forming an all-glass heat pipe type evacuated collector tube".

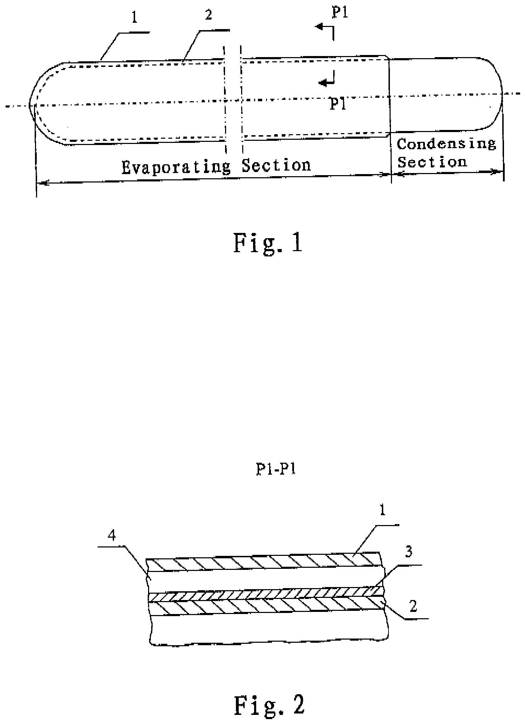

In the China Patent having a disclosure No. CN 1125290C and a patent No. 98101708.8, disclosed is a thermal collector tube and its water heating apparatus, wherein the thermal collector tube is characterized by an inside glass tube with an medium of liquid closed and an outside glass tube, a portion of said inside glass tube is exposed and closed, and the internal space formed by the outside glass tube and said inside glass tube remains in a reduced pressure state, so that an area of the said inside glass tube covered by the outside glass tube functions as an evaporating section, and an area of the said inside glass tube exposed out of the outside glass tube functions as a condensing section. Fig. 1 is a schematic diagram of the structure of the thermal collector tube, where the reference number 1 is the outside glass tube, 2 is the inside glass tube which is divided into an evaporating section and a condensing section, and P1-P2 is a section line; and Fig. 2 is a schematic sectional structure view taken along P1-P2, where the reference number 3 is a selective absorbent film, and 4 is a vacuum gap.

China patent application No. CN1121577A describes an "all-glass" heat vacuum tube solar collector, which is applicable to provide energy by using solar as an all-weather solar-collecting heat collector, so as to be used in applications such as hot water providing, boiling water providing, heating, drying, sun rooms, air conditioner, refrigeration, ice manufacture, water pumping, power generation and water desalination. It is made by the following processes: an inner glass tube coated with a selective absorbing coating and a cover glass tube are fused and enclosed. The interlining space is evacuated and the inner glass tube is evacuated and is introduced with a suitable amount of medium. Then the inner glass tube is fused and enclosed, so as to form an all-glass heat vacuum tube solar collector. The advantages of the collector include vacuum insulation, thermal insulation, high heat-absorption efficiency, quick heat-transferring, high passing rate and low cost.

Germany patent application No. DE2646987A1 describes a heat pipe for converting solar radiation into heat and transfer the heat to a medium with a certain heat-transfer characteristic, with an elongated, hermetically sealed cover containing an evaporative section which returns the heat through to a medium which has a particular heat transfer characteristic; with an elongate capillary wick disposed at least inside the cover of the evaporation section, and with a vaporizable working fluid within the capillary wick, the existing evaporative section (E) which receives the solar radiation is substantially transparent to the radiation of a selected range of solar radiation, where the radiation is transmitted through the evaporative section (E) .Up to now, however, the envisagement of the all-glass heat pipe based evacuated solar collector tube described above has not yet put into practical application.

The first reason is that those skilled in the art always deem that the all-glass heat pipe based evacuated solar collector tube has a safety problem. In a sunny day, the solar irradiance is higher than 800 W/m², and the stagnation temperature in the empty all-glass evacuated solar collector tube exceeds 200°C. Through initial calculations, for example, an all-glass heat pipe based evacuated solar collector tube having an inner glass tube with a diameter of 34 mm and a length of 1.6 m will have a closed space volume of about 1.45 liter, if one gram molecule of water is used as the heat-transfer medium, when one gram molecule of water medium is evaporated completely, an aqueous vapor pressure of 19 bar is created in said evacuated closed space of about 1.45 liter. The tensile strength of glass is about a tenth of its compressive strength, and the glass tube may expand to be broken. Therefore, the patent applications and patents described above have given neither the use amount of the heat-transfer medium, nor the embodiments.

The second reason is a heat-transfer problem of the evaporating section and the condensing section. On one hand, the spectrum selective absorbing coating of the external surface of the inner glass tube converts sunlight into heat, and the thermal energy is transferred to a liquid heat-transfer medium via the heat conductance of the wall of the glass tube. Since the heat conductivity factor of borosilicate glass is about three thousandths of that of copper, the liquid medium in the closed space of greater volume takes a longer time to be evaporated and gasified in respond to the sunlight. Therefore the all-glass heat pipe based evacuated solar collector tube has a phenomenon that the evaporation or gasification is slower than the sunlight-heat conversion of the selective absorbing coating. On the other hand, the gasified liquid heat-transfer medium is condensed into liquid heat-transfer medium in the condensing section, the thermal energy of potential heat and apparent heat released by which is transferred to the outside of the condensing section through its glass tube that again has extreme poor heat conductance, and the heat-transfer resistance is great. The patent applications and patents described above have not pointed out the length and the shape of the condensing section of the heat pipe.

Due to the viewpoint described above, the all-glass heat pipe based evacuated solar collector tube has commonly considered to have poor safety and heat collecting performance, and this viewpoint has obstructed the development and application of the all-glass heat pipe based evacuated solar collector tube.

### SUMMARY OF THE INVENTION

An object of the present invention is, by researching the types and amounts of liquid heat-transfer media, to provide an all-glass heat pipe based evacuated solar collector tube, which has high safety, reasonable types and amounts of liquid heat-transfer media, and improved length and shape of glass of a condensing section.

The object of the present invention is achieved by the feature of claim 1. Preferred embodiments are defined by the features of the dependent claims.

In particular, the invention relates to an all-glass heat pipe based evacuated solar collector tube, which comprises an all-glass evacuated solar collector tube (evaporating section) 5, an attached tube (condensing section) 4, a closed space 15 and a liquid heat-transfer medium 17, said all-glass evacuated solar collector tube 5 comprising a covering glass tube 6, an inner glass tube 7, an annular closing end 9, a selective absorbing coating 10, a support retainer 11 for the dome of the inner glass tube, and a vacuum jacket 13, characterized by that the volume ratio of the volume of the liquid heat-transfer medium to that of said closed space is 0.03%∼10%, and that the length of the attached tube is in a range of 40 mm∼300 mm and said attached tube (14) is provided with a thin wall for limiting pressure, and the thickness of which is 1/2-4/5 of the glass thickness of other portions of the attached tube (14). Said liquid heat-transfer medium of the invention can use hydrosoluble solutions, including inorganic acids and inorganic salt aqueous solutions, such as NaCl, potassium dichromate, potassium sulfate, ammonium sulfate, ammonium phosphate, sulphuric acid, phosphoric acid, or their mixtures.

Said liquid heat-transfer medium of the invention can further use low molecular organic solutions, such as propylene glycol, ethyl alcohol or their mixture.

Said liquid heat-transfer medium of the invention is preferably an aqueous solution of 0~30% propylene glycol, which has a lower frozen point and does not tend to frozen, even in the cold winter.

The volume ratio of the volume of said heat-transfer medium to that of said closed space in the invention is preferably greater than or equal to 0.03%, but less than 0.1%. Since the amount of the liquid heat-transfer medium is very small, the glass tube has no the broken problem due to frozen, and the actuation is rapid.

The volume ratio of the volume of said liquid heat-transfer medium to that of said closed space in the invention is 0.2%-0.67% (1/150), and the amount of the liquid heat-transfer medium is proper, thereby assuring that there is sufficient amount of the liquid heat-transfer medium to carry away the heat obtained from the evaporating section.

The volume ratio of the volume of said liquid heat-transfer medium to that of said closed space in the invention is greater than 0.5%, but less than or equal to 10%. The amount of the liquid heat-transfer medium is relatively more, and the quantitative injection is more convenient.

According to the invention, in the case that the heat-transfer medium is hydrosoluble or propylene glycol aqueous solution, the volume ratio of the medium is preferably 0.08%-1%. In such a range, the all-glass heat pipe based evacuated solar collector tube has an optimum solar collector performance.

Said liquid heat-transfer medium of the invention further is preferably ethyl alcohol aqueous solution. Ethyl alcohol has a low gasification temperature, so that the function of the all-glass heat pipe based evacuated solar collector tube can be started rapidly, i.e., the speed responding to solar irradiation is rapid. However, since ethyl alcohol is liable to be gasified, and higher amount of ethyl alcohol medium will creates higher pressure in practical application with respect to other types of media, a danger occurs more possibly that the glass tube expands to be broken. It is surprising that in the tests of the invention, the characteristics of the ethyl alcohol heat-transfer medium are different from those of hydrosoluble solution heat-transfer medium and propylene glycol aqueous solution heat-transfer medium. According to testing, the ethyl alcohol medium, when having a volume ratio greater than 1%, obtains better solar collector performance.

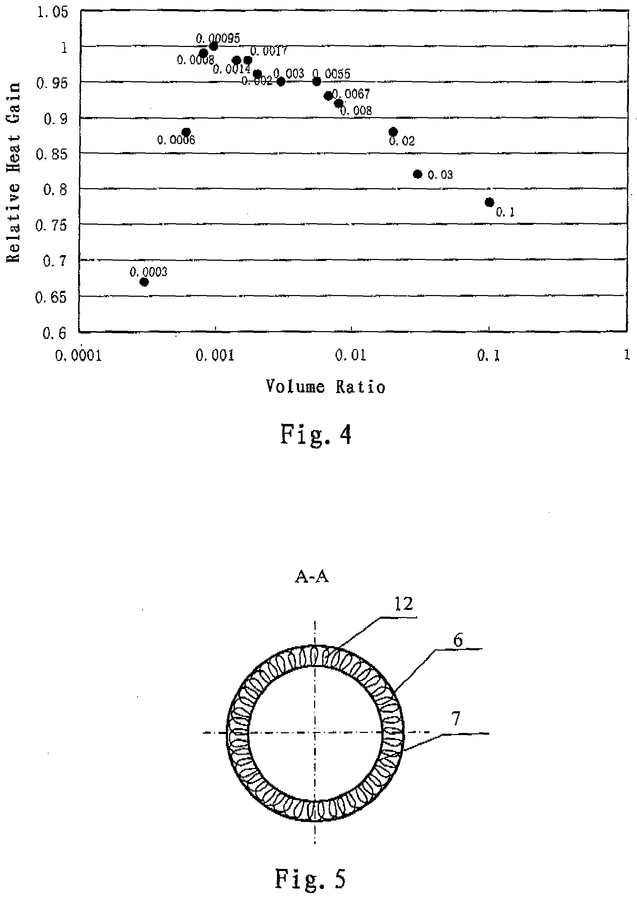

On the outside wall of the inner glass tube of said all-glass evacuated solar collector tube of the invention, along the axial direction there is one or more annular support members, and after the annular support members are attached, the strength of the heat pipe based evacuated collector tube when being mounted and transported, and better coaxality between the inner glass tube and the covering glass tube in technology, can be assured. The annular support members may be preferably fixed in a range of 20-100 mm of the distance from the annular bonding end if the purpose is to simplify the annular closing and jointing technology, and many annular support members also can be distributed along the axial direction or placed in intermediate position if the purpose is to not be damaged easily during the transportation. The structure schematic diagram of the annular support member is shown in Fig. 5, where the reference number 12 is the annular support member, 6 is the covering glass tube, and 7 is the inner glass tube.

Said attached tube of the invention is provided with a thin wall for limiting pressure, the thickness of which is 1/2∼4/5 of the glass thickness of other portions, and after the thin wall for limiting pressure is provided, if the pressure is too high in the closed space, the thin wall for limiting pressure will first be broken, and the portions outside the hot water tank of the water heating apparatus will still remain intact, so as to assure the normal use of the solar water heaters.

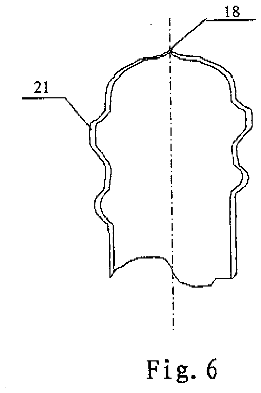

In order to make the attached tube have better condensing effects, the attached tube can be processed to have a plurality of protrusions, thus to increase heat transfer area of the condensing section without increasing its length. Those protrusions 21 on the attached tube can be seen in Fig. 6.

In order to assure that the all-glass heat pipe based evacuated solar collector tube expands to be broken at a specified position, at the closing end of the attached tube there is provided with a thin wall for limiting pressure, the thickness of which is 1/2∼4/5 of the glass thickness of other portions of the attached tube and can at least have a strength for withstanding 6 times of atmosphere pressure, such that when a too high vapor pressure occurs in the closed space, the thin wall for limiting pressure would first expand to be broken, and the broken pieces of glass would be kept at the bottom of the water tank, while the thermal collector tube portions exposed out of the heat storage water tank will still remain intact so as to not cause the whole solar water heaters to leak water, thereby assuring the normal use of the solar water heaters.

Since the amount of the medium of the all-glass heat pipe based evacuated solar collector tube is often relatively small, normally only some remains at the bottom of the thermal collector tube; but when the thermal collector tubes are assembled into a solar water heaters, the end portion of the thermal collector tube would be inserted into a seat of the solar water heaters, such that a portion of the inner glass tube with selective absorbing coating is sheltered from sunlight to obstruct the temperature raising and heating of the liquid heat-transfer medium. Therefore, in order to increase the operation responding speed of the all-glass heat pipe based evacuated solar collector tube, the distance from the dome of the inner glass tube to a place of 15 mm near the closing end of the covering glass tube is set in a range of 30 mm-120 mm, preferably of 60 mm-90 mm.

The advantages of the invention are as follows: the proposed amount of the liquid heat-transfer medium of the all-glass heat pipe based evacuated solar collector tube assures its safe use, and the proposed length range of the condensing section assures that the thermal collector tube has a reasonable heat-exchange property; the thin wall for limiting pressure provided specially on the attached tube is located inside the water tank during use, and when the thin wall is broken, the thermal collector tube still operates normally, thereby also assuring that the solar water heaters can operate normally and never cause human damage; the annular support member provided axially on the external wall of the inner glass tube can improve the structure strength of the thermal collector tube, and assures that it can not easily damaged in the mounting and transporting process; the one or more protrusions provided on the attached tube can increase the condensing area and accelerate the heat exchanging; and the shorten length of the inner glass tube can allow sunlight to radiate directly to the dome of the inner glass tube and to heat directly the liquid heat-transfer medium, thereby assuring the operation responding speed of the solar collector tube.

Since the all-glass heat pipe based evacuated solar collector tube is a unitary integration of the evacuated collector tube and the heat pipe, a sunlight-heat device for heat collecting and conducting is formed. The stagnation parameter, the solar irradiation amount under collector tube stagnation with water, and heat loss coefficient in the conventional solar thermal testing method can not be used. Those skilled in the art are lack of full understanding of the actual operation state of the heat-transfer medium in the inner glass tube cavity, and there is no reasonable testing scheme for comparing heat collecting performances of the all-glass heat pipe based evacuated solar collector tube under various conditions. There is a need for developing a new heat performance testing method, so as to judge the relationships the heat performance with respect to the types of heat-transfer media, the medium amount, the length of the condensing section and the different diameters of evacuated collector tubes in said preferred all-glass heat pipe based evacuated solar collector tube. Up to now, any testing methods or testing data for the all-glass heat pipe based evacuated solar collector tube have not been disclosed in the prior art.

In the testing of the invention, an all-glass heat pipe based evacuated solar collector tube is used, where the covering glass tube 6 has an external diameter of ϕ47 mm, the inner glass tube 7 has an external diameter of ϕ37 mm and a length of 1500 mm, the attached tube 14 has a length of 120 mm, and the formed closed space 15 has a volume of about 1.45 liter. The condensing section of said all-glass heat pipe based evacuated solar collector tube is inserted into the heat storage tank to heat therein the water at environment temperature, and at certain solar irradiation, the increased temperature of water in the heat storage tank is measured to determine the heat gain of such an all-glass heat pipe based evacuated solar collector tube.

It is unexpected that in the testing of the invention, in the case that the solar irradiation is from 8.63 MJ/m² to 24.1 MJ/m² (corresponding to solar irradiation from 4 to 8 hours in a sunny day), the glass breaking phenomena have not occurred when the all-glass heat pipe based evacuated solar collector tubes with different amounts of liquid heat-transfer media are used. This has shown that the estimation method transformed according to the gas state equation may not accord with the actual operation state of the heat-transfer medium in the tube cavity.

In the specification of the invention, said amounts of the median all represent the volume ratio of the volume of the liquid heat-transfer medium to that of closed space of the all-glass heat pipe based evacuated solar collector tube.

### BRIEF DESCRIPTION OF THE DRAWINGS

Fig. 1 is a structure schematic view of a heat pipe based thermal collector tube.
Fig. 2 is a sectional structure schematic view of a heat pipe based thermal collector tube of Patent CN 1125290 C taken along line P1-P1.
Fig. 3 is a structure schematic view of one embodiment of the invention.
Fig. 4 is a diagram of relationship between a relative heat gain and an amount of liquid heat-transfer medium in an embodiment of the invention, where the abscissa represents volume ratio of volume of a liquid heat-transfer medium to that of closed space of an all-glass heat pipe based evacuated solar collector tube and the ordinate represents the relative heat gain value obtained from the all-glass heat pipe based evacuated solar collector tube having different volume ratios of the liquid heat-transfer medium.
Fig. 5 is a structure schematic view of positional relationship between an annular support member and covering and inner glass tubes.
Fig. 6 is a structure view of an attached tube provided with protrusions.

### DETAILED DESCRIPTION OF THE PREFERRED EMBODIMENT

### Embodiment 1

### The preparation of an all-glass heat pipe based evacuated solar collector tube

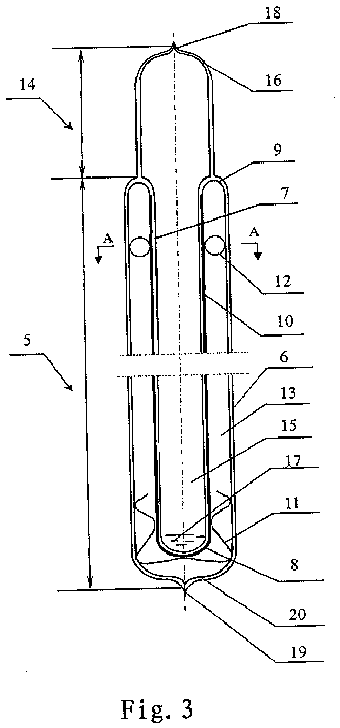

As shown in Fig. 3, reference number 5 is an all-glass evacuated solar collector tube, 6 is a covering glass tube, 7 is an inner glass tube, 8 is the dome of the inner glass tube, 9 is an annular closing end, 10 is a selective absorbing coating, 11 is a support member for the dome of the inner glass tube, 12 is an annular support member, 13 is a vacuum jacket, 14 is an attached tube, 15 is a closed space, 16 is a thin wall for limiting pressure, 17 is a liquid heat-transfer medium, 18 is a closing nozzle of the attached tube, 19 is a closing nozzle of the covering glass tube, and 20 is a place where the external diameter is ϕ15 mm near the closing end of the covering glass tube. The all-glass evacuated solar collector tube is prepared in following steps: first forming the dome 8 at one end of the inner glass tube 7; then sputtering the selective absorbing coating 10 onto the outside surface of the inner glass tube 7; fitting over the annular support member 12 at a proper position of the inner glass tube 7 and inserting the inner glass tube 7 into the covering glass tube 6 which has provided with the support member 11 for the dome of the inner glass tube and has an out gassing pipe; fixing the dome 8 of the inner glass tube by the support member 11 for the dome of the inner glass tube; then annularly bonding the other ends of the covering glass tube 6 and the inner glass tube 7 to obtain the annular closing end 9, on this time substantially completing the all-glass evacuated solar collector tube 5; after that fusing and bonding the attached tube 14 with an out gassing pipe and the annular closing end 9 together, on this time the covering glass tube 6 and the attached tube 14 each having an out gassing pipe; drawing out air by an evacuating system; when the vacuum jacket between the covering glass tube 6 and the inner glass tube 7 reaches a required vacuum, sealing off the mouth of out gassing pipe of the covering glass tube; and when the vacuum of the closed space 15 formed between the inner glass tube 7 and the attached tube 14 satisfies the requirement, first infilling the liquid heat-transfer medium and then sealing off the mouth of the attached tube 14, thereby obtaining said all-glass heat pipe based evacuated solar collector tube having following specifications through annealing: corresponding to type ϕ37/ϕ47-1500 of the all-glass evacuated solar collector tube 5, that is, the covering glass tube 6 having a external diameter of ϕ47 mm, the inner glass tube 7 having a external diameter of ϕ37 mm and a length of 1500 mm, the attached tube 14 having a length of 120 mm, and the formed closed space 15 having a volume of about 1.45 liter.

### Embodiment 2

### Using water as the heat-transfer medium and comparing the heat performances of the all-glass heat pipe based evacuated solar collector tube having different amounts of medium

The all-glass evacuated solar collector tube prepared in Embodiment 1 is selected and used, wherein pure water serves as the liquid heat-transfer medium. Based on the volume ratio of the volume of the liquid heat-transfer medium to that of the closed space of the all-glass heat pipe based evacuated solar collector tube, in the heat pipe based evacuated collector tube there is preset water of 0.03%, 0.08%, 0.095%, 0.14%, 0.17%, 0.2%, 0.3%, 0.55%, 0.67%, 0.8%, 2%, 3%, and 10%, respectively. Those thermal collector tubes are respectively used to heat the water of 1.45 liter in a heat storage tank at environment temperature under a condition that the solar irradiation accumulates to 6.9 MJ/m², and with the highest one of the obtained heat gain being taken as a reference number 1, to it the heat gain of the collecting tubes with other amounts of the liquid heat-transfer medium are compared, so as to obtain the relative heat gain shown in a discrete point diagram of Fig. 4. By means of Fig. 4, a tendency can be seen, and the liquid heat-transfer media, when their volume ratios being in a range of 0.08%-1%, all have fairly high relative heat gain.

### Embodiment 3

### Using-aqueous solution of 30% propylene glycol as the heat-transfer medium and comparing the heat performances of the all-glass heat pipe based evacuated solar collector tube having different amounts of medium

By using a testing method same as that of Embodiment 2, the all-glass heat pipe based evacuated solar collector tube with aqueous solution of 30% propylene glycol is tested, and it is found that such solution has same heat gain performance as that of water. However, since the aqueous solution of propylene glycol has better antifreeze property, the performance of the all-glass heat pipe based evacuated solar collector tube, which is made by selecting and using aqueous solution of propylene glycol having a medium amount of 0.08%-1%, is again preferable.

### Embodiment 4

### Using ethyl alcohol as the heat-transfer medium and comparing the heat performances of the all-glass heat pipe based evacuated solar collector tube having different amounts of medium

By using a testing method same as that of Embodiment 2, the all-glass heat pipe based evacuated solar collector tube with ethyl alcohol is tested. The medium, when its volume ratio is 1 %, has relatively optimum heat gain performance, and the aqueous solution of ethyl alcohol has an even better antifreeze property and a lower gasification temperature.

**Table 1**

| | | | |
|---|---|---|---|
| Volume ratio of medium amount | 0.095% | 0.55% | 1 |
| Relative heat gain | 55% | 95% | 100% |

### Embodiment 5

### The determination of the length of the condensing section

In order to determine the length of the condensing section, i.e. the length of the attached tube, selected is the all-glass heat pipe based evacuated solar collector tube in which the amount of heat-transfer medium is 0.55%, and the length of the condensing section is selected as 40 mm, 60 mm, 90 mm, 120 mm, 150 mm, 180 mm, 200 mm, and 300 mm, which are also the sizes allowed by the internal diameter of the heat storage water tank of the normal water-heating apparatus. The all-glass heat pipe based evacuated solar collector tubes with condensing sections having those different lengths are tested by using a method same as that described above, and the obtained optimum heat-exchange lengths are in a range of 90 mm-180 mm, wherein both too long and too short condensing sections are unfavorable for heat-exchange and affect reversely the heat gain of the thermal collector tube, and further, if too long, on the one hand the assembling is difficult and on the other hand the temperature of the condensing section can not raise up because the heat created by the gasification of the liquid heat-transfer medium has consumed at the bottom of the condensing section. In addition, other volume ratios of amounts of media have also been used to perform similar tests, and similar results have been obtained, which are not described here for brevity.

## Claims

1. An all-glass heat pipe based evacuated solar collector tube (5), comprising
an all-glass evacuated solar collector tube (5), an attached tube (14), a closed space (15) and a liquid heat-transfer medium (17),
said all-glass evacuated solar collector tube (5) comprising a covering glass tube (6), an inner glass tube (7), an annular closing end (9), a selective absorbing coating (10), a support member (11) for the dome (8) of the inner glass tube (7), and a vacuum jacket (13) which forms an evaporating section in use; the attached tube (14) forming a condensing section in use **characterized in that** the volume ratio of the volume of the liquid heat-transfer medium (17) to that of said closed space (15) is 0.03%∼10%, and **in that** the length of the attached tube (14) is in a range of 40 mm∼300 mm, said attached tube (14) is provided with a thin wall for limiting pressure, and **in that** the thickness of which is 1/2∼4/5 of the glass thickness of other portions of the attached tube (14).

2. The all-glass heat pipe based evacuated solar collector tube (5) according to Claim 1, **characterized by** that said heat-transfer medium (17) is an aqueous solution of 0∼30% propylene glycol.

3. The all-glass heat pipe based evacuated solar collector tube (5) according to Claim 1, **characterized by** that said liquid heat-transfer medium (17) is ethyl alcohol aqueous solution.

4. The all-glass heat pipe based evacuated solar collector tube (5) according to Claim 1, **characterized by** that the volume ratio of the volume of said liquid heat-transfer medium (17) to that of said closed space (15) is greater than or equal to 0.03%, but less than 0.1%.

5. The all-glass heat pipe based evacuated solar collector tube (5) according to Claim 1, **characterized by** that the volume ratio of the volume of said liquid heat-transfer medium (17) to that of said closed space (15) is 0.2%-0.67%.

6. The all-glass heat pipe based evacuated solar collector tube (5) according to Claim 1, **characterized by** that the volume ratio of the volume of said liquid heat-transfer medium (17) to that of said closed space (15) is greater than 0.5%, but less than or equal to 10%.

7. The all-glass heat pipe based evacuated solar collector tube (5) according to Claim 1, 2 or 3, **characterized by** that the volume ratio of the volume of said liquid heat-transfer medium (17) to that of said closed space (15) is 0.08%-1% and that the length of the attached tube (14) is 80 mm∼180 mm.

8. The all-glass heat pipe based evacuated solar collector tube (5) according to Claim 1, 2 or 3, **characterized by** that said attached tube (14) has one or more protrusions to increase the surface area of the condensing section.

9. The all-glass heat pipe based evacuated solar collector tube (5) according to Claim 1, 2 or 3, **characterized by** that the distance from the dome (8) of said inner glass tube (7) to a place of external diameter of 15 mm near the closing end of the covering glass tube (6) is 30 mm-120 mm, preferably 60 mm-90 mm.

10. The all-glass heat pipe based evacuated solar collector tube (5) according to Claim 1, 2 or 3, **characterized by** that on the outside wall of the inner glass tube (7) of said all-glass evacuated solar collector tube (5), along the axial direction there is one or more annular support members (12).

11. The all-glass heat pipe based evacuated solar collector tube (5) according to Claim 10, **characterized by** that when the number of said annular support members (12) is one the annular support member (12) is in intermediate position along the axial direction.

12. The all-glass heat pipe based evacuated solar collector tube (5) according to Claim 10, **characterized by** that said many annular support members (12) are uniformly distributed along the axial direction.

13. The all-glass heat pipe based evacuated solar collector tube (5) according to Claim 10, **characterized by** that said annular support members (12) are in a range of 20-100 mm of the distance from the annular closing end (9) of the all-glass evacuated solar collector tube (5).

## Patentansprüche

1. Solarkollektor-Vakuumröhre (5) auf Basis eines Ganzglas-Wärmerohrs (Heatpipe), mit:
einer Ganzglas-Solarkollektorröhre (5), einer befestigten Röhre (14), einem geschlossenen Raum (15) und einem flüssigen Wärmeübertragungsmedium (17),
wobei die Ganzglas-Solarkollektor-Vakuumröhre (5) eine Abdeckglasröhre (6), eine innere Glasröhre (7), ein ringförmiges Verschlussende (9), eine selektive Absorptionsbeschichtung (10), ein Halteelement (11) für eine Kuppe (8) der inneren Glasröhre (7) und einen Vakuummantel (13) aufweist, der im Betrieb einen Verdampfungsabschnitt bildet, und
wobei die befestigte Röhre (14) im Betrieb einen Kondensationsabschnitt bildet;
**dadurch gekennzeichnet, dass**
das Volumenverhältnis zwischen dem Volumen des flüssigen Wärmeübertragungsmediums (17) und demjenigen des geschlossenen Raums (15) 0,03% - 10% beträgt;
und dadurch, dass
die Länge der befestigten Röhre (14) im Bereich von 40 mm - 300 mm liegt,
wobei die befestigte Röhre (14) eine dünne Wand zum Begrenzen des Drucks aufweist;
und dadurch, dass
die Dicke der dünnen Wand 1/2 - 4/5 der Glasdicke anderer Abschnitte der befestigten Röhre (14) beträgt.

2. Solarkollektor-Vakuumröhre (5) nach Anspruch 1, **dadurch gekennzeichnet, dass** das Wärmeübertragungsmedium (17) eine wässrige Lösung aus 0 - 30% Propylenglykol ist.

3. Solarkollektor-Vakuumröhre (5) nach Anspruch 1, **dadurch gekennzeichnet, dass** das flüssige Wärmeübertragungsmedium (17) eine wässrige Ethylalkohollösung ist.

4. Solarkollektor-Vakuumröhre (5) nach Anspruch 1, **dadurch gekennzeichnet, dass** das Volumenverhältnis zwischen dem Volumen des flüssigen Wärmeübertragungsmediums (17) und demjenigen des geschlossenen Raums (15) größer oder gleich 0,03% und kleiner als 0,1% ist.

5. Solarkollektor-Vakuumröhre (5) nach Anspruch 1, **dadurch gekennzeichnet, dass** das Volumenverhältnis zwischen dem Volumen des flüssigen Wärmeübertragungsmediums (17) und demjenigen des geschlossenen Raums (15) 0,2% - 0,67% beträgt.

6. Solarkollektor-Vakuumröhre (5) nach Anspruch 1, **dadurch gekennzeichnet, dass** das Volumenverhältnis zwischen dem Volumen des flüssigen Wärmeübertragungsmediums (17) und demjenigen des geschlossenen Raums (15) größer als 0,5% und kleiner oder gleich 10% ist.

7. Solarkollektor-Vakuumröhre (5) nach Anspruch 1, 2 oder 3, **dadurch gekennzeichnet, dass** das Volumenverhältnis zwischen dem Volumen des flüssigen Wärmeübertragungsmediums (17) und demjenigen des geschlossenen Raums (15) 0,08% - 1% beträgt und die Länge der befestigten Röhre (14) 80 mm - 180 mm beträgt.

8. Solarkollektor-Vakuumröhre (5) nach Anspruch 1, 2 oder 3, **dadurch gekennzeichnet, dass** die befestigte Röhre (14) einen oder mehrere Vorsprünge zum Vergrößern der Oberfläche des Kondensationsabschnitts aufweist.

9. Solarkollektor-Vakuumröhre (5) nach Anspruch 1, 2 oder 3, **dadurch gekennzeichnet, dass** der Abstand der Kuppe (8) des inneren Glasrohrs (7) von einer Stelle in der Nähe des Verschlussendes des Abdeckglasrohrs (6), wo der Außendurchmesser 15 mm beträgt, 30 mm - 120 mm, vorzugsweise 60 mm - 90 mm, beträgt.

10. Solarkollektor-Vakuumröhre (5) nach Anspruch 1, 2 oder 3, **dadurch gekennzeichnet, dass** auf der Außenseitenwand der inneren Glasröhre (7) der Ganzglas-Solarkollektor-Vakuumröhre (5) entlang der axialen Richtung ein oder mehrere ringförmige Trägerelemente (12) angeordnet sind.

11. Solarkollektor-Vakuumröhre (5) nach Anspruch 10, **dadurch gekennzeichnet, dass**, wenn die Anzahl der ringförmigen Trägerelemente (12) eins beträgt, das ringförmige Trägerelement (12) entlang der axialen Richtung an einer Zwischenposition angeordnet ist.

12. Solarkollektor-Vakuumröhre (5) nach Anspruch 10, **dadurch gekennzeichnet, dass** die mehreren ringförmigen Trägerelemente (12) entlang der axialen Richtung gleichmäßig verteilt sind.

13. Solarkollektor-Vakuumröhre (5) nach Anspruch 10, **dadurch gekennzeichnet, dass** die ringförmigen Trägerelemente (12) innerhalb eines Abstandsbereichs von 20 - 100 mm vom ringförmigen Verschlussende (9) der Ganzglas-Solarkollektor-Vakuumröhre (5) angeordnet sind.

## Revendications

1. Tube collecteur (5) de chaleur solaire sous vide à base d'une conduite thermique toute en verre comprenant
un tube collecteur (5) de chaleur solaire sous vide tout en verre, un tube rattaché (14), un espace fermé (15) et un milieu de transfert thermique liquide (17),
ledit tube collecteur (5) de chaleur solaire sous vide tout en verre comprenant un tube de verre de recouvrement (6), un tube interne (7) en verre, une extrémité de fermeture annulaire (9), un revêtement (10) d'absorption sélective, un élément (11) de support pour la cloche (8) du tube interne (7) en verre, et une enveloppe sous vide (13) qui constitue une section d'évaporation lors de l'utilisation ;
le tube rattaché (14) constituant une section de condensation lors de l'utilisation, **caractérisé en ce que**
le ratio en volume du volume du milieu de transfert thermique liquide (17) sur ledit espace fermé (15) est de 0,03 % à ∼ 10 %,
et **en ce que**
la longueur du tube rattaché (14) est dans une plage de 40 mm à ∼ 300 mm,
ledit tube rattaché (14) est fourni avec une paroi mince pour limiter la pression,
et
**en ce que**
l'épaisseur de celle-ci représente de 1/2 à ∼ 4/5 de l'épaisseur de verre des autres parties du tube rattaché (14).

2. Tube collecteur (5) de chaleur solaire sous vide à base d'une conduite thermique toute en verre selon la revendication 1, **caractérisé en ce que** ledit milieu de transfert thermique (17) est une solution aqueuse de 0 à ∼ 30 % de propylène glycol.

3. Tube collecteur (5) de chaleur solaire sous vide à base d'une conduite thermique toute en verre selon la revendication 1, **caractérisé en ce que** ledit milieu de transfert thermique liquide (17) est une solution aqueuse d'alcool éthylique.

4. Tube collecteur (5) de chaleur solaire sous vide à base d'une conduite thermique toute en verre selon la revendication 1, **caractérisé en ce que** le ratio en volume du volume dudit milieu de transfert thermique liquide (17) sur ledit espace fermé (15) est supérieur ou égal à 0,03 %, mais inférieur à 0,1 %.

5. Tube collecteur (5) de chaleur solaire sous vide à base d'une conduite thermique toute en verre selon la revendication 1, **caractérisé en ce que** le ratio en volume du volume dudit milieu de transfert thermique liquide (17) sur ledit espace fermé (15) est de 0,2 % à 0,67 %.

6. Tube collecteur (5) de chaleur solaire sous vide à base d'une conduite thermique toute en verre selon la revendication 1, **caractérisé en ce que** le ratio en volume du volume dudit milieu de transfert thermique liquide (17) sur ledit espace fermé (15) est supérieur à 0,5 %, mais inférieur ou égal à 10 %.

7. Tube collecteur (5) de chaleur solaire sous vide à base d'une conduite thermique toute en verre selon la revendication 1, 2 ou 3, **caractérisé en ce que** le ratio en volume du volume dudit milieu de transfert thermique liquide (17) sur ledit espace fermé (15) est de 0,08 % à 1 % et que la longueur du tube rattaché (14) est de 80 mm à ∼ 180 mm.

8. Tube collecteur (5) de chaleur solaire sous vide à base d'une conduite thermique toute en verre selon la revendication 1, 2 ou 3, **caractérisé en ce que** ledit tube rattaché (14) a une ou plusieurs protubérances pour augmenter la surface spécifique de la section de condensation.

9. Tube collecteur (5) de chaleur solaire sous vide à base d'une conduite thermique toute en verre selon la revendication 1, 2 ou 3, **caractérisé en ce que** la distance à partir de la cloche (8) dudit tube de verre intérieur (7) jusqu'à un endroit du diamètre extérieur de 15 mm à proximité de l'extrémité de fermeture du tube de verre de recouvrement (6) est de 30 mm à 120 mm, de préférence de 60 mm à 90 mm.

10. Tube collecteur (5) de chaleur solaire sous vide à base d'une conduite thermique toute en verre selon la revendication 1, 2 ou 3, **caractérisé en ce que**, sur la paroi extérieure du tube de verre intérieur (7) dudit tube collecteur (5) de chaleur solaire sous vide tout en verre, le long de la direction axiale, il y a un ou plusieurs éléments de support annulaires (12).

11. Tube collecteur (5) de chaleur solaire sous vide à base d'une conduite thermique toute en verre selon la revendication 10, **caractérisé en ce que**, lorsque le nombre desdits éléments de support annulaires (12) est de un, l'élément de support annulaire (12) est dans une position intermédiaire le long de la direction axiale.

12. Tube collecteur (5) de chaleur solaire sous vide à base d'une conduite thermique toute en verre selon la revendication 10, **caractérisé en ce que** lesdits plusieurs éléments de support annulaires (12) sont distribués de manière uniforme de long de la direction axiale.

13. Tube collecteur (5) de chaleur solaire sous vide à base d'une conduite thermique toute en verre selon la revendication 10, **caractérisé en ce que** lesdits éléments de support annulaires (12) sont dans une plage de 20 à 100 mm de la distance à partir de l'extrémité de fermeture annulaire (9) du tube collecteur (5) de chaleur solaire sous vide tout en verre.
